# EUROPEAN PATENT APPLICATION

(11) **EP 2 889 273 A1**
(43) Date of publication of application: **01.07.2015**
(21) Application number: 13199902.1
(22) Date of filing: 31.12.2013
(51) Int. Cl.: C02F 3/08, C02F 1/00

(54) **Method for the treatment of waste water, and a waste water treatment unit**

(71) Applicant: F&B Investment s.a.r.l., Beirut (LB)
(72) Inventor: BADREDDINE, Hassan Hans, POB 14-5422 BEIRUT (LB)
(74) Representative: Algemeen Octrooi- en Merkenbureau B.V.

(57) **Abstract**

The invention relates to a method for the treatment of waste water, and a waste water treatment unit. The method introducing waste water in at least one treatment chamber comprising biomass capable of treating waste water, wherein at least part of the biomass is deposited on buoyant biomass carrier elements immersed in the waste water, simultaneously dissolving an oxygen into the waste water, and contacting the waste water with the biomass. The invention provides a fast, low-maintenance and energy-efficient process for treating waste water.

## Description

The invention relates to a method for the treatment of waste water, and a waste water treatment unit.

Conventional treatment procedures require an effluent filtering step wherein solid particles are removed in order to obtain the required clarity of the water. The three stages main of the traditional waste water treatment are the settlement stage, biological treatment stage and the clarification stage. Supplementary stages may be performed, depending on the pollution present in the waste water.

In the settlement stage, also called the primary stage, heavy materials settle at the bottom and lighter solids float to the surface. The settled and floating materials are removed and the remaining liquid may be discharged or subjected to secondary treatment.

In the biological treatment stage, also called the secondary stage, dissolved and suspended biological matter are removed, usually by digestion through indigenous, water-borne micro-organisms. The microorganisms follow sludge that needs to be removed regularly in maintenance, and may require separation before the water can be forwarded to the third stage.

The clarification stage, also called tertiary treatment, typically involves a filtering step wherein the remaining solids are removed to meet the water clarity requirements.

Compared t the classical methods, more efficient processes have been developed. For example, the patent US7488413 describes waste water treatment plant includes a treatment chamber or reactor containing a plurality of buoyant sludge carriers. In the base of the treatment chamber is a biofilm collection chamber. Arranged coaxially within the chamber is a pipe with an air injection device arranged at the foot thereof. In use waste water is introduced into the treatment chamber through an inlet and is caused to circulate around the treatment chamber through the pumping action of the shaft and air injector. Treated water passes through the biofilm collection chamber to an outer settlement chamber having an outlet for treated water.

The continuing world wide demand for clean water for various purposes, in particular drinking water, requires an enormous water treatment capacity. There is an on-going demand for ways to improve water treatment capacity. With respect to the increasing demand for energy, there is also an on-going need to perform water treatment in an energy-efficient way. There is also an on-going need for water purification systems requiring a low maintenance effort.

It is an object of the invention to provide an improvement in water treatment capacity.

It is another object of the invention is to perform the water treatment in a more energy efficient way.

It is yet another object of the invention to provide water purification systems requiring that require low maintenance.

The embodiments according to the invention provide a solution for one or more of these objects.

The invention provides a method for the treatment of waste water, comprising the steps of
A) introducing waste water in at least one treatment chamber comprising biomass capable of treating waste water, wherein at least part of the biomass is deposited on buoyant biomass carrier elements immersed in the waste water,
B) simultaneously dissolving an oxygen-containing gas, preferably air, into the waste water, and contacting the waste water with the biomass, and
C) removing the treated waste water from the treatment chamber.

It was shown that this method allows treating waste water at a faster and more energy efficient. Compared to a conventional waste water treatment system, the injecting with air can be at a 50% lower injection rate. For example, a standard injection rate in a conventional process would be the injection of 1 kg oxygen per Kg BOD. The simultaneous injection into the same chamber according to the invention requires only 0.5 kg oxygen per kg BOD. This is also more efficient than the process in US7488413, where the oxygen is injected into water in a compartment separate from the compartment containing the biomass.

Preferably, the oxygen is dissolved at a rate that results in near-saturation of the waste water at the location where the oxygen is introduced into the waste water. Preferably, the oxygen is introduced as pressurized air, which may for instance be obtained by an air compressor.

Preferably, the waste water is flowing and the carrier elements are moved by the flowing waste water while being contacted with the dissolved oxygen-containing gas.

It is preferred if the oxygen-containing gas is injected into the waste water. The injection induces additional turbulence into the waste water and improves the interaction with the biomass for cleaning.

Preferably, at least part of the biomass not deposited on the carrier elements is collected. The collected biomass may be employed elsewhere, for instance in odour reduction.

The collected biomass may be reintroduced into the treatment chamber. The recycling of the excess biomass leads to an improved digestion of the biomass, leading to a great decrease in the amount of sludge residing in the system. For example, in test runs, the amount of sludge could be reduced to less that 4% of the amount of sludge obtained from a conventional process for treatment of a similar amount of water. The reduction of sludge produced leads to greatly reduced maintenance costs. Preferably, the collected biomass is reintroduced into the treatment chamber after premixing with influent waste water.

It is preferred if a pollution parameter of the waste water is determined before introducing the water into the at least one treatment chamber, determining a treatment capacity of a treatment chamber to reduce the pollution parameter with a predetermined pollution reduction, and distributing the waste water over a number of treatment chambers depending on the desired pollution reduction and treatment capacity, to achieve a predetermined retention time.

Preferably, the pollution parameter is selected from the group consisting of the chemical oxygen demand (COD), the biochemical oxygen demand (BOD), total ammonia and total suspended solids. The number of treatment chambers could for instance be selected to achieve a retention time of the waste water in the process less than 2 hours. Preferably, the pollution reduction is at least 90 wt%, more preferably at least 95 wt%

The invention also provides a waste water treatment unit, comprising at least one treatment chamber provided with
- at least one inlet for allowing influent waste water into the chamber,
- at least one outlet for transporting effluent treated waste water away from the chamber,
- at least one gas injection means, arranged for injecting an oxygen-containing gas, preferably air, below a predetermined minimum waste water level, and
- biomass capable of decomposing waste when immersed in the waste water, supported by a plurality of buoyant biomass carrier elements,
wherein the gas injection means and the buoyant carrier elements are arranged in the same treatment chamber.

This allows for simultaneously contacting the waste water with dissolved oxygen and biomass, resulting in an improved efficiency of oxygen used when for instance compared to conventional waste water treatment or the treatment described in US7488413, wherein air is introduced into the waste water separately from the treatment with the biomass.

It is preferred if the inlet is connected to an equalizing tank for supplying waste water to the treatment chamber at a predetermined waste water level.

In a preferred embodiment, the unit further comprises at least one biomass collecting outlet, positioned below the minimum waste water level, for transporting biomass away from the chamber when not supported by a buoyant biomass carrier element.

It is advantageous if the biomass collecting outlet is connected to the equalizing tank, and arranged for recycling the collected biomass. The recycling results in sludge reduction, which leads to low maintenance costs.

Advantageously, the waste water treatment unit comprises multiple treatment chambers. This allows for increasing the needed water treatment capacity by dividing the waste water over the units.

Preferably, the multiple treatment chambers are connected in a parallel arrangement. This would for instance allow maintenance of separate units without the need of stopping the process.

### Examples

The invention will now be further elucidated using the following non-limiting examples.
- Figure 1: shows a water treatment unit according to the invention.
- Figure 2: shows multiple water treatment units according to the invention in an array of such units.
- Figure 3: schematically shows a flow diagram of a water treatment process according to the invention.

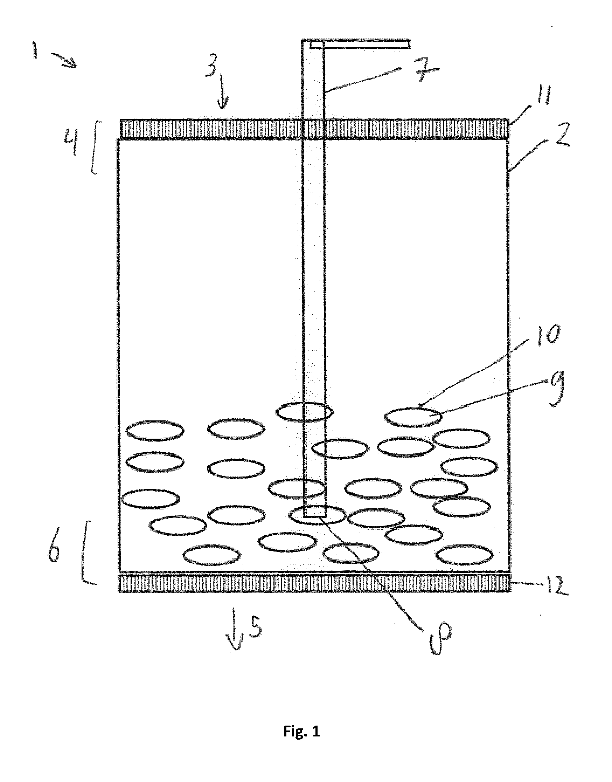

Figure 1 shows a waste water treatment unit 1, having a treatment chamber 2 provided with an inlet 3 for allowing influent waste water into the chamber, located at the top 4 of the chamber 2, and an outlet 5 for transporting effluent treated waste water away from the chamber, located in the bottom section 6. Gravity may be used to invoke a flow of waste water from the inlet 3 to the outlet 5 through the treatment chamber 2.

The treatment chamber 2 has a gas injection pipe 7, arranged for injecting pressurized air from an external source, such as an air compressor, into the waste water. The injection position 8 is located towards the bottom section 6, and allows the injected air bubbles to rise upwards in counter-flow with the waste water flow.

In operation, the treatment chamber 2 contains biomass 9 capable of treating waste water, supported by a plurality of buoyant carrier elements 10. Such buoyant carrier elements are for instance known from US7488413, and are incorporated herein by reference. The carrier elements 10 are designed to have a density lower than the waste water, and therefore invoke a buoyant force driving the biomass upwards. As a counter force against buoyancy, the waste water flow drives the buoyant carrier elements 10 downwards. This results in a dynamic movement of the carrier elements, resulting in increased effective biomass surface. The carriers 10 may occupy for instance 10 to 30% of the volume of the chamber 2.

Simultaneously, the moving carrier elements 10 are in contact with the rising air bubbles from the gas injection pipe 7. It was found that this results in an acceleration of the treatment process when compared with a process wherein air is dissolved in the waste water prior to contacting the biomass for treatment, such as shown in US7488413. The unit as shown herein allows a very efficient and fast treatment of COD, BOD, total ammonia and total suspended solids, especially when compared to traditional water treatment units.

In order to contain the carrier elements in the chamber 2, upper and lower retention screens 11, 12 are provided at the top and bottom of the chamber, respectively. Excess biomass falling off the carrier elements falls through the retention screens, and may be collected though the outlet.

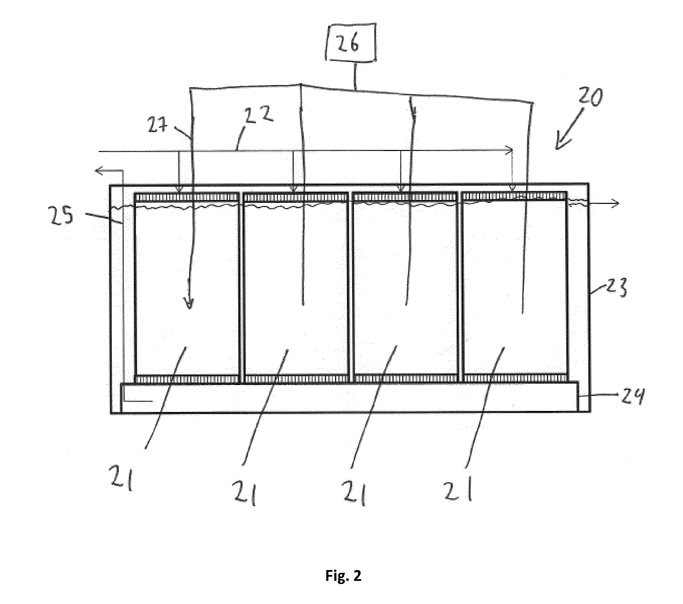

Figure 2 shows an array 20 consisting of multiple units 21 as shown in figure. The waste water enters the array through distribution channels 22 leading to the inlets of each unit 21. The buoyant biomass carrier elements are omitted here for clarity. The units are enclosed in a container 23 having a shared outlet of treated water, which can for instance pass the effluent treated water to further treatment or storage. The units are connected to a common air injection system 26, supplying pressurized air to the air injection channels 27 for each of the units. but it is also possible to provide separate air injection systems for each unit 23, or for a group of units. At the bottom of the container 23, excess biomass from the containers is collected in a collector channel 24. The biomass may be recycled for use in odour control in other parts of the water treatment plant, through the biomass recycling loop 25.

The units 21 are arranged in a parallel configuration, wherein each unit or group of units can be separately closed off. This is advantageous as it allows the water treatment to continue to work while other units are undergoing maintenance. The parallel arrangement also allows for adjusting the water treatment capacity to the current need, and also makes it relatively easy to expand the capacity by incorporating more units into the system. The system array as shown contains only 4 units, but comparable arrays may be built according to the needed capacity, having for instance 10, 20, 40 or even more units. The number of units needed in a given situation is related to the COD, BOD, total ammonia and total suspended solids to be treated.

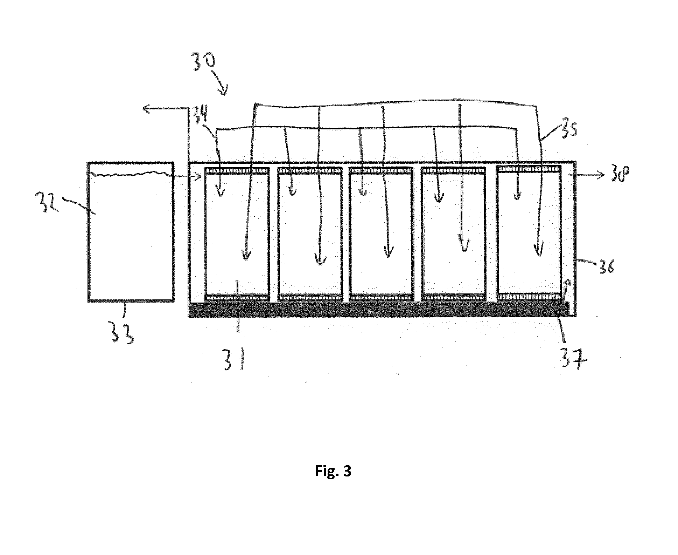

Figure 3 schematically shows the waste water treatment process system 30 using the treatment units 31 according to the invention. The buoyant biomass carrier elements are omitted here for clarity. Waste water 32, containing a given amount of COD, BOD, total ammonia and total suspended solids to be treated, is collected in an equalizing tank 33. From the equalizing tank 33, the waste water is distributed to the multiple treatment units 31 through their inlets 34. Simultaneously, air is injected through the air injection channels 35. At the bottom of the units 35, treated water enters the container 36. Excess biomass from the units 31 is collected in the collecting channel 37. The effluent treated water is transported away from the container 36 through one or more outlet channels 38.

### Comparative test

A test unit as described herein was used in the treatment of waste water containing predetermined amounts of COD, BOD, total ammonia and total suspended solids. The same amount of BOD, COD, Ammonia used in our experiment was reduced to 98 % in one treatment stage, compared to the conventional treatment of three main stages.

The waste water to be treated had a COD of 800 ppm, a BOD of 5000 ppm, and total suspended solids of 500 ppm. The targets for the effluent after treatment were a COD of 30 ppm, a BOD of 10 ppm, and total suspended solids of 1 ppm. The retention time/flow rate through the unit was adjusted to meet this target. In Table I, the results are shown, comparing the influent to the effluent 1 (overloaded rate, double of the optimized rate) and effluent 2 (optimized rate). The amounts of water pollutants were determined using standardized procedures. Similar results could be obtained in multiple experiments over a period of several weeks.

Table I: Water treatment comparing influent with Eff1: effluent with system overload; and Eff2: optimized flow rates.

| | influent | Eff1 (Overloaded) | Eff2 (optimized) |
|---|---|---|---|
| Ammonia mg/l | 27.6 | 9.2 | 0 |
| Grease/oil mg/l | 4 | 3 | 0 |
| Solids mg/l | 152 | 59 | 17 |
| COD mg/l | 358 | 151 | 26 |
| BOD mg/l | 265 | 95 | 8 |
| E. Coli *10⁶ | 0.8 | 0.012 | 0 |
| Salmonella *10³ | 60 | 0.6 | 0 |

Homogenized samples were taken manually from the influent and effluent to determine the components of interest.

The amount of ammonia species present in the sample, measured according to ASTM D6919 - 09.

The amount of grease and oil was determined according to ASTM D3921-96.

Solids are the totals suspended solids, determined according to ASTM D5907 - 13.

The chemical oxygen demand (COD) is determined according to ASTM D1252 - 06(2012)e1.

The biochemical oxygen demand (BOD) is determined according to ASTM WK28466.

The amount of E. Coli present in the cell was determined according to ASTM D5392 - 93.

The amount of Salmonella bacteria was determined according to ASTM D5465 - 93.

The target values under optimized results were reached in a retention time of from under 4 hours, and even in 2 hours after optimizing parameters, compared to conventional method treatment times of 14-18 hours for the same volume of water. Interestingly, also in an overloaded system (Eff1) the results are still acceptable for some applications, such as irrigation.

The unit according to the invention was capable to perform the water treatment in a more energy-efficient way than traditional units. The calculated energy consumption per cubic metre of treated waste water was approximately 0.04 kw /m³ comparing to 1.0-1.25 kw/m³ for the traditional three-stage treatment.

The amount of sludge produced was very low, allowing for the units to be operational for a very long time before maintenance cleaning for sludge removal is needed.

Further, the collected superfluous biomass can be easily recycled to control odours elsewhere in the water treatment plant.

## Claims

1. Method for the treatment of waste water, comprising the steps of
A) introducing waste water in at least one treatment chamber comprising biomass capable of treating waste water, wherein at least part of the biomass is deposited on buoyant biomass carrier elements immersed in the waste water,
B) simultaneously dissolving an oxygen-containing gas, preferably air, into the waste water, and contacting the waste water with the biomass, and
C) removing the treated waste water from the treatment chamber.

2. Method according to claim 1, wherein the waste water is flowing and the carrier elements are moved by the flowing waste water while being contacted with the dissolved oxygen-containing gas.

3. Method according to claim 1 or 2, wherein the oxygen-containing gas is injected into the waste water.

4. Method according to any of the preceding claims, wherein at least part of the biomass not deposited on the carrier elements is collected.

5. Method according to claim 4, wherein the collected biomass is reintroduced into the treatment chamber.

6. Method according to claim 5, wherein the collected biomass is reintroduced into the treatment chamber after premixing with influent waste water.

7. Method according to any of the preceding claims, wherein a pollution parameter of the waste water is determined before introducing the water into the at least one treatment chamber,
determining a treatment capacity of a treatment chamber to reduce the pollution parameter with a predetermined pollution reduction,
and distributing the waste water over a number of treatment chambers depending on the desired pollution reduction and treatment capacity, to achieve a predetermined retention time.

8. Method according to claim 6, wherein the pollution parameter is selected from the group consisting of the chemical oxygen demand (COD), the biochemical oxygen demand (BOD), total ammonia and total suspended solids.

9. Method according to any of the claims 6-7, wherein the pollution reduction is at least 90%, preferably at least 95%.

10. A waste water treatment unit, comprising at least one treatment chamber provided with
- at least one inlet for allowing influent waste water into the chamber,
- at least one outlet for transporting effluent treated waste water away from the chamber,
- at least one gas injection channel, arranged for injecting an oxygen-containing gas, preferably air, below a predetermined minimum waste water level, and
- biomass capable of decomposing waste when immersed in the waste water, supported by a plurality of buoyant biomass carrier elements, wherein the gas injection means and the buoyant carrier elements are arranged in the same treatment chamber.

11. The waste water treatment unit according to claim 10, wherein inlet is connected to an equalizing tank for supplying waste water to the treatment chamber at a predetermined waste water level.

12. The waste water treatment unit according to claim 10 or 11, wherein the unit further comprises at least one biomass collecting outlet, positioned below the minimum waste water level, for transporting biomass away from the chamber when not supported by a buoyant biomass carrier element.

13. The waste water treatment unit according to claim 11 or 12, wherein the biomass collecting outlet is connected to the equalizing tank for recycling the collected biomass.

14. The waste water treatment unit according to any of the claims 10-13, wherein the waste water treatment unit comprises multiple treatment chambers.

15. The waste water treatment unit according to claim 14, wherein the multiple treatment chambers are connected in a parallel arrangement.
